# DEMANDE DE BREVET EUROPEEN

(11) **EP 0 709 656 A2**
(43) Date de publication de la demande: **01.05.1996**
(21) Numéro de dépôt: 95115906.0
(22) Date de dépôt: 10.10.1995
(51) Int. Cl.: G01F 23/26

(54) **Robinet avec jauge de niveau intégrée**

(30) Priorité: 31.10.1994 LU 88552
(71) Demandeur: LUXEMBOURG PATENT COMPANY S.A., L-1720 Luxembourg (LU)
(72) Inventeur: Bourscheid, Georges, L-7303 Steinsel (LU); Muttesch, Jim, L-7222 Walferdange (LU)
(74) Mandataire: Meyers, Ernest

(57) **Abrégé**

Le robinet comporte un corps de robinet (10) avec un organe de fermeture (12) et une zone de montage (16) permettant au robinet d'être fixé, de manière amovible, sur le col d'un récipient de gaz. La jauge de niveau (20) est une jauge capacitive constituée d'une tige allongée (24) et d'un tube cylindrique (22) entourant coaxialement ladite tige (24), le tube (22) et la tige (24) étant portés par le corps du robinet (10) et s'étendant sur toute la hauteur du récipient. La mesure du niveau est basée sur la capacité entre la tige (24) et le tube (22) et est renseignée par un dispositif d'affichange.

## Description

La présente invention concerne un robinet avec une jauge de niveau intégrée pour un récipient de gaz liquéfié comprenant un corps de robinet avec un organe de fermeture et une zone de montage permettant au robinet d'être fixé, de manière amovible, sur le col du récipient de gaz.

Jusqu'à présent, le contenu des récipient de gaz liquéfié était, en général, déterminé par pesée. Si un tel procédé permet une détermination exacte et fiable du contenu, il demande néanmoins toujours la présence d'une balance.

Il existe également des jauges de niveau à flotteur. Ces jauges comportent généralement des parties en matière synthétique et des parties mobiles, ce qui exclut toute possibilité d'utilisation dans des bouteilles contenant des gaz d'un degré de pureté élevé. Ces gaz ne tolèrent, en effet, pas l'usage de matières plastiques à cause des risques qu'ils soient pollués par ces matières ou à cause de problèmes de compatibilité.

Ces jauges posent également des problèmes dans le cas de bouteilles de gaz carbonique. Ces bouteilles sont souvent stockées et transportées couchées, les unes sur les autres et rarement manipulées avec douceur, si bien que les jauges de niveau à flotteur sont exposées à des risques de détérioration par chocs mécaniques.

Pour réduire les risques de rupture dans la bouteille à cause du long porte-à-faux du flotteur, le document EP 0 167 409 propose l'usage d'un flotteur oscillant. Cette jauge est toutefois très compliquée, aussi bien pour ce qui concerne le flotteur que le système d'affichage du niveau et ne saisit qu'une plage limitée de variations de niveau.

Le but de la présente invention est de prévoir un nouveau robinet à jauge intégrée qui est simple, peu sensible au mauvais traitement des bouteilles et qui fournit des résultats de mesure fiables sur toute la plage de variation de niveau.

Pour atteindre cet objectif, le robinet proposé par la présente invention est caractérisé en ce que la jauge de niveau est une jauge capacitive constituée d'une tige cylindrique et d'un tube entourant coaxialement ladite tige, le tube et la tige étant portés par le corps du robinet et s'étendant sur toute la hauteur du récipient et en ce qu'il est prévu un moyen de mesure de la capacité entre la tige et le tube et un dispositif d'affichage du niveau de gaz dans le récipient.

La tige est isolée électriquement du tube et du corps du robinet par des joints céramiques ou PTFE.

Des pièces d'écartement en céramique ou en PTFE sont prévues dans la jauge pour assurer un écartement constant entre le tube et la tige.

Le dispositif d'affichage du niveau est, de préférence, un affichage à cristaux liquides LCD ou LED.

D'autres particularités et caractéristiques de l'invention ressortiront de la description détaillée d'un mode de réalisation avantageux présenté ci-dessous, à titre d'illustration, en référence aux dessins annexés dans lesquels :

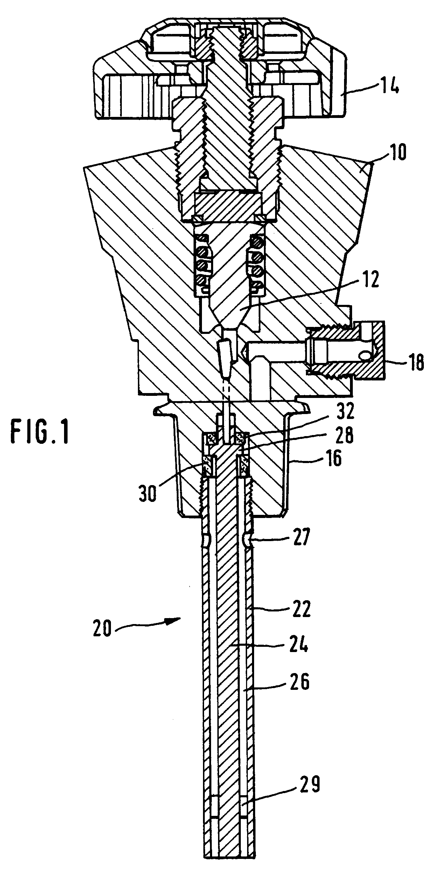

- la Figure 1 est une vue en coupe longitudinale à travers un robinet selon la présente invention et

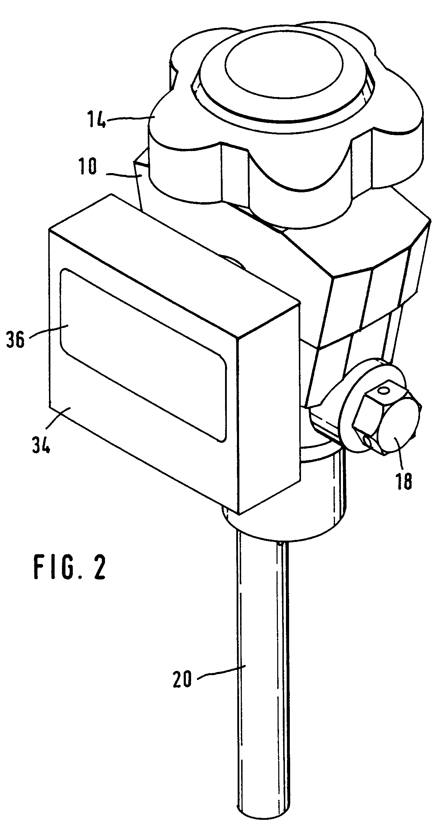

- la Figure 2 montre une vue en perspective d'un robinet selon la présente invention.

Le robinet représenté sur les Figures comporte un corps métallique 10 renfermant un organe de fermeture 12 qui est actionné par un volant de manoeuvre 14. La base du corps comporte un filetage 16 permettant au robinet d'être vissé sur une bouteille de gaz liquéfié. La référence 18 désigne une soupape de sûreté à membrane éclatable connue en soi et destinée à éviter les risques d'explosion de la bouteille en cas de surpression anormale.

Le corps 10 du robinet est prolongé à sa base par une jauge de niveau 20 qui pénètre dans la bouteille et s'étend sur toute la hauteur de celle-ci. Cette jauge 20 est constituée d'un tube cylindrique 22 traversé axialement par une tige 24 qui définit avec le tube 22 un espace cylindrique annulaire 26. Le positionnement de la tige 24 dans le tube 22 est assuré par une série de pièces d'écartement en céramique 29 ou en PTFE. Le tube 22 comporte, dans la région supérieure, des ouvertures d'aération 27 pour permettre au gaz de pénétrer dans l'espace annulaire 26.

Le tube 22 est porté directement par la base du corps 10, tandis que la tige 24 est supportée par le tube 22 par l'intermédiaire d'une rondelle 28 et d'un joint céramique 30 ou en PTFE. L'isolation électrique entre la tige 24 et le tube 22 d'une part et le corps 10 du robinet d'autre part est assurée par le joint 30 et un second joint en céramique 32 ou en PTFE.

La tige 22 et le tube 24 sont en métal, bon conducteur d'électricité, et forment les électrodes d'un condensateur dont on mesure, de façon connue en soi, la capacité. C'est cette mesure de la capacité qui fournit des renseignements sur le niveau de gaz dans la bouteille.

Le contenu de la bouteille est, en effet, quelque soit le niveau de remplacement, toujours constitué d'une phase liquide et d'une phase gazeuse. Or, la capacité électrique de la phase gazeuse est différente de celle de la phase liquide, ce qui fait que tout changement du niveau dans la bouteille, c'est-à-dire de la limite entre la phase gazeuse et la phase liquide, entraîne une modification de la capacité globale de la jauge. Il suffit dès lors d'un étalonnage approprié pour convertir directement la mesure de la capacité en mesure de niveau.

A cet effet, le tube 22 et la tige 24 sont reliés électriquement à un dispositif de mesure électronique, connu en soi, se trouvant dans un boîtier 34 attaché au corps 10 du robinet et comprenant également un moyen d'affichage 36, de préférence, un affichage à cristaux liquides ou LED.

Le dispositif de mesure comporte, de préférence, un microprocesseur qui est programmable pour différentes longueurs de jauge afin d'avoir une adaptation automatique à la longueur de la bouteille.

Le dispositif d'affichage 36 peut être associé à un émetteur d'un signal sonore ou optique qui est activé automatiquement lorsque la bouteille est vide ou que le niveau tombe en-dessous d'un seuil minimal prédéterminé.

La jauge 20 ne comporte pas de matière synthétique, ce qui lui permet d'être utilisée avec des gaz d'un degré de pureté élevé sans risque de pollution de ceux-ci.

Étant donné que, contrairement aux jauges à flotteur, la jauge proposée par la présente invention ne comporte pas de parties mobiles, elle ne souffre pas d'un mauvais traitement de la bouteille (choc, chute, renversement, etc). Même si la jauge 20 se plie légèrement, les résultats de mesure ne sont pas notablement influencés.

Il est possible de profiter de la présence de l'électronique intelligente à microprocesseur pour exécuter des ordres ou commandes, par exemple, changement de bouteille en fonction des mesures effectuées.

## Revendications

1. Robinet avec jauge de niveau intégrée pour un récipient de gaz liquéfié comprenant un corps de robinet (10) avec un organe de fermeture (12) et une zone de montage (16) permettant au robinet d'être fixé, de manière amovible, sur le col du récipient de gaz, **caractérisé** en ce que la jauge de niveau (20) est une jauge capacitive constituée d'une tige allongée (24) et d'un tube cylindrique (22) entourant coaxialement ladite tige (24), le tube (22) et la tige (24) étant portés par le corps du robinet (10) et s'étendant sur toute la hauteur du récipient et en ce qu'il est prévu un moyen de mesure de la capacité entre la tige (24) et le tube (22) et un dispositif d'affichage du niveau de gaz dans le récipient.

2. Robinet selon la revendication 1, **caractérisé** en ce que la tige (24) est isolée électriquement du tube (22) et du corps du robinet (10) par des joints céramiques (30, 32) ou en PTFE.

3. Robinet selon la revendication 1, **caractérisé** en ce que le dispositif d'affichage du niveau est un dispositif à cristaux liquides (36) ou LED.

4. Robinet selon la revendication 1, **caractérisé** en ce que des pièces d'écartement (29) sont prévues entre le tube (22) et la tige (24).
